Europäisches Patentamt

European Patent Office

Office européen des brevets ·

(11) Veröffentlichungsnummer: **0 252 244**
**A1**

## (12) EUROPÄISCHE PATENTANMELDUNG

(21) Anmeldenummer: 87106850.8

(51) Int. Cl.⁴: **C07F 9/38**

(22) Anmeldetag: **12.05.87**

(30) Priorität: **07.07.86 DE 3622786**

(43) Veröffentlichungstag der Anmeldung:
**13.01.88 Patentblatt 88/02**

(84) Benannte Vertragsstaaten:
**AT BE CH DE ES FR GB GR IT LI LU NL SE**

(71) Anmelder: **Benckiser-Knapsack GmbH**
**Dr. Albert-Reimann-Strasse 2**
**D-6802 Ladenburg(DE)**

(72) Erfinder: **Kleemann, Stephan, Dr.**
**Mozartstrasse 25**
**D-6905 Schriesheim(DE)**
Erfinder: **Ehret, Werner**
**Richard-Wagner-Strasse 50**
**D-6901 Wilhelmsfeld(DE)**

(74) Vertreter: **Grussdorf, Jürgen, Dr.**
**Patentanwälte Zellentin & Partner**
**Rubensstrasse 30**
**D-6700 Ludwigshafen(DE)**

(54) **Verfahren zur Herstellung von Vinyldiphosphonsäure und ihren Salzen.**

(57) Die Erfindung betrifft ein Verfahren zur Bildung von Vinyldiphosphonsäure und ihren Salzen durch Eliminierung einer flüchtigen Säure aus 1-(O-Acyl)ethan-1,1-diphosphonsäure, insbesondere von Essigsäure aus 1-(O-Acetyl)ethan-1,1-diphosphonsäure. Die 1-(O-Acyl)ethan-1,1-diphosphonsäure wird vorzugsweise in Form ihres Salzes eingesetzt und das Verfahren bei Temperaturen von 200 bis 300 °C durchgeführt.

EP 0 252 244 A1

## Verfahren zur Herstellung von Vinyldiphosphonsäure und ihren Salzen

Die vorliegende Erfindung betrifft ein verbessertes Verfahren zur Herstellung von Vinyldiphosphonsäure und ihren Salzen aus technisch leicht zugänglichen, wirtschaftlichen Vorstufen.

Niederalkylen-1,1-diphosphonsäuren und ihre Salze sind z.B. aus der GB-PS 1 204 967 bekannt. Es ist aus dieser Literaturstelle ferner bekannt, daß diese Verbindungen außergewöhnlich gute Sequestrier-und Dispergiereigenschaften aufweisen und daher als wasserenthärtende Mittel, Stabilisationsmittel und Additive in Seifen Detergentien etc., sowie als Zusätze in einer Vielzahl von technischen Produkten mit großem Vorteil eingesetzt werden können.

Ferner können diese monomeren Verbindungen entweder allein oder zusammen mit anderen vinylgruppenhaltigen Verbindung polymerisiert werden und weisen als solche z.B. Flammschutzeigenschaften auf.

Für diese Möglichkeiten des Einsatzes wird insbesondere auf die vorstehende Literaturstelle verwiesen.

Gemäß der GB-PS 1 204 967 wird Vinyldiphosphonsäure bzw. ihre Salze hergestellt, indem man 1-Hydroxyethan-1,1-diphosphonsäure bzw. ein Alkalisalz derselben, ggf. in Gegenwart von anderen nicht oxidierenden Metallionen, bei Temperaturen vom 200 - 500 °C thermisch dehydriert. Vorzugsweise wird dabei ein molares Verhältnis von Metallionen zu Phosphonsäure von 4 : 1 bis 5 : 1 eingehalten. Eine Nacharbeitung dieses Verfahrens zeigt, daß unter den angegebenen Parametern der Gehalt von Vinyldiphosphonsäure im Endprodukt unter 40 % liegt, wobei die Natur der Verunreinigungen nicht untersucht worden ist und sich als spektroskopisch uneinheitlich erweisen, ohne daß Doppelbindungen enthalten sind.

In der DE-PS 21 08 042 wird ein weiteres Verfahren zur Dehydratisierung von 1-Hydroxyethan-1,1-diphosphonsäure bzw. ihren Salzen beschrieben, wobei diese Verbindungen 10 - 15 Minuten auf Temperaturen von 350 - 380 °C erhitzt werden sollen. Unter diesen Umständen soll eine Abspaltung von 0,1 - 0,8 Mol Wasser pro Mol Salz stattfinden und ein Produkt gebildet werden, welches nur einen geringen Anteil an ethylenischem Material enthält (50 % bei 0,8 Mol Dehydratisierung, 20 % bei 0,5 Mol Dehydratisierung und ungefähr 0 bei 0,2 Mol Dehydratisierung). Als weitere Produkte sollen kondensierte Phosphate und andere Produkte entstehen, was in übereinstimmung mit unseren vorstehenden Befunden steht, daß diese Bedingungen zur Herstellung von Vinyldiphosphonsäure nicht geeignet sind.

Da gemäß diesem Stand der Technik eine Vinyl-1,1-diphosphonsäure nur mit schlechter Ausbeute und unter umständlichen Reinigungsverfahren zu erhalten ist, bestand die Aufgabe, ein einfacheres, wirtschaftlicheres Verfahren zur Herstellung dieses Produktes zu finden.

Überraschenderweise konnte diese Aufgabe durch die in den Ansprüchen gekennzeichneten Maßnahmen gelöst werden.

Nach dem bekannten Verfahren wird Wasser aus den Hydroxyethan-1,1-diphosphonsäuren Salzen direkt abgespalten. Die Eliminierung tritt erst bei relativ hohen Temperaturen in merklichem Maße auf. Die hohen Temperaturen begünstigen dabei offensichtlich die Bildung von Nebenprodukten.

Erfindungsgemäß wird daher die Hydroxy-Gruppe der 1-Hydroxyethan-diphosphonsäure durch eine leichter austretende Acyl-Gruppe ersetzt.

Die Eliminierung einer flüchtigen Säure, vorzugsweise Essigsäure, aus 1-(O-Acyl)ethan-1,1-diphosphonsäure, vorzugsweise aus 1-(O-Acetyl)ethan-1,1-diphosphonsäure verläuft unter relativ milden Bedingungen, d.h. durch Erhitzen auf Temperaturen von 200 - 300 °C, wobei in vergleichsweise großer Reinheit und mit Ausbeuten von 70 - 80 % an reiner Vinyldiphosphonsäure eine vorteilhafte Umwandlung erzielt wird. Die erzielte Reinheit und Ausbeute erleichtert die weiterführende Verarbeitung, insbesondere die Polymerisation und Copolymerisation in hohem Maße und erspart, im Gegensatz zu den Produkten des Standes der Technik, in vielen Fällen sogar eine aufwendige zusätzliche Anreicherung bzw. Reinigung der Monomeren.

Als flüchtige Säure, die als Austrittsgruppe verwendet werden können, sind die Alkylcarbonsäuren mit 1 bis 10 C-Atomen, vorzugsweise 2 - 5 C-Atome, insbesondere die Essigsäure und Propionsäure zu nennen. Andere Säure, auch wenn sie als "Fluchtgruppe" gut geeignet sind, sind normalerweise weniger wirtschaftlich und daher nicht bevorzugt.

Die als Ausgangsprodukte dienenden 1-Acyl-ethan-1,1-diphosphonsäuren können durch Umsetzung von 1-Hydroxyethanen-1,1-diphosphonsäure mit den entsprechenden Säuren bzw. aktiven Derivaten derselben, beispielsweise Estern oder Säurechloriden oder Anhydriden, hergestellt werden. Besonders bevorzugt ist jedoch eine direkte Herstellung aus Essigsäure, phosphoriger Säure und Acylanhydrid, wobei als Acylanhydrid Essigsäureanhydrid verwendet wird, um Mischreaktionen zu vermeiden.

Die thermische Umsetzung der 1-(O-Acyl)ethan-1,1-diphosphonsäure wird vorzugsweise in Gegenwart von 4 bis 5 Mol Alkali oder Ammoniak durchgeführt, so daß sich das entsprechende Vinyl-diphosphonsäure-tetraalkalisalz bildet. Die Acylgruppe wird entweder ebenfalls als Alkalisalz oder Ammoniumsalz gebunden oder aufgrund der hohen Temperaturen verflüchtigt. Die Verflüchtigung kann ferner dadurch gefördert werden, daß die Reaktion in einem leichten Vakuum, vorzugsweise bei 50 - 500 Milibar durchgeführt wird.

Aus entstandenen Salzen kann durch Umsetzung mit stark sauren Ionenaustauschern die freie Säureform bzw. durch Umsalzen auch andere Metallsalze hergestellt werden. Als Metallsalze sind insbesondere die Alkalisalze und hierbei wiederum Natrium-und Kaliumsalze bevorzugt, da sie besonders gut wasserlöslich sind, jedoch können auch Calcium-, Magnesium-und andere Salze, insbesondere verschiedene Ammoniumsalze für die weitere Verarbeitung vorteilhaft sein (vergl. hierzu GB-PS 1 204 967).

Die folgenden Beispiele sollen die Erfindung erläutern, ohne jedoch ihren Umfang einzuschränken.

**Beispiel 1**

Reaktanden:

| | | |
|---|---|---|
| Phosphorige Säure | (98,5 %ig) | Die Mengenangaben sind |
| Essigsäureanhydrid | (100 %ig) | aus nachfolgender |
| Natriumcarbonat | (100 %ig) | Tabelle ersichtlich |
| Essigsäure | (100 %ig) | |

Vorlage : 31 Vol.% der Lösung Essigsäure/Phosphorige Säure
Zugabe I : 69 Vol.% der Lösung Essigsäure/Phosphorige Säure
Zugabe II : Essigsäureanhydrid
Zugabe III: Natriumcarbonat
Die Phosphorige Säure wurde in der Essigsäure gelöst.

Versuchsdurchführung:

In einem zwei Liter Planschliffreaktionsgefäß, versehen mit Rührer, Thermometer, Rückflußkühler, zwei Tropftrichtern und einem Feststoff-Dosiertrichter wird die Vorlage auf 120 bis 130 °C aufgeheizt. Nach Erreichen dieser Temperatur werden parallel Zugabe I und II innerhalb einer Stunde zugetropft. Während der Zugabe stellt sich ein stetiger Rückfluß ein. Die Reaktionstemperatur beträgt ca. 120 °C. Nach beendeter Zugabe läßt man noch zwei Stunden nachreagieren und gibt danach, ohne Heizung, bei einer Reaktionstemperatur von ca. 100 °C, langsam Zugabe III zu. Wenn nach beendeter Zugabe keine homogene Lösung entstanden ist, wird solange auf 120 °C bis 130 °C erwärmt, bis sich alles Natriumcarbonat gelöst hat. Die so erhaltenen, homogenen Produkte weisen, jenachdem wieviel Natrium-Ionen sie pro Mol 1-(O-Acetyl)-ethan-1,1-diphosphonsäure enthalten, verschiedene Konsistenzen auf. Mit steigender Anzahl an Natrium-Ionen steigt die Viskosität, das Tetranatriumphosphonat ist bereits bei 100 °C bis 120 °C eine zähe Paste. Die harten Natriumphosphonate werden mit Mörser und Pistell pulverisiert und anschließend auf zwei verschiedene Arten calciniert.

Methode a) :

Das Pulver wird in einer Porzellanschale im Muffelofen statisch erhitzt. Nach Erreichen der gewünschten Reaktionstemperatur von ca. 220 °C verbleibt das Phosphonat 1 bis 2 Stunden lang im Ofen. Es resuliert ein etwas aufgeschäumtes, farbloses Produkt, das sich leicht pulverisieren läßt.

Methode b) :

Das Pulver wird in den aufgeheizten Laborkneter eingetragen, aufgeschmolzen und bei 140 °C bis 220 °C innerhalb von ca. zwei Stunden die überschüssige Essigsäure und Essigsäureanhydrid unter - schwachem Wasserstrahlpumpenvakuum abgezogen. Nach vollständigem Entfernen des Lösungsmittels wird das Phosphonat pulvrig. Nach vier Stunden Calcinierung bei 220 bis 250 °C resultiert ein farbloses Pulver.

In der folgenden Tabelle 1 sind verschiedene , nach den vorstehenden Methoden durchgeführte Versuche zusammengefaßt. Der Gehalt an Vinyldiphosphonsäure wird spektroskopisch, bzw. durch Kernresonanzmessung bestimmt.

**Tabelle 1 :**

| Nr. | Methode | in Mol | | | | Zeit Stdn. | Temp. °C | Ausbeute in % |
|-----|---------|--------|-----|---------|--------|------|------|------|
| | | $H_3PO_3$ | $Ac_2O$ | $CH_3COOH$ | $Na_2CO_3$ | | | |
| 1 | a | 4 | 4,4 | 7,2 | 4 | 1 | 220 | 63,5 |
| 2 | a | 4 | 4,4 | 7,2 | 4 | 1 | 240 | 66,5 |
| 3 | a | 4 | 4,4 | 7,2 | 5 | 1 | 220 | 58,6 |
| 4 | b | 4 | 4,8 | 7,2 | 4,5 | 4 | 250 | 62,7 |
| 5 | b | 4 | 6,0 | 7,2 | 4 | 4 | 250 | 71,0 |
| 6 | b | 4 | 4,8 | 7,2 | 4 | 4 | 250 | 76,2 |
| 7 | b | 4 | 5,0 | 7,2 | 4 $K_2CO_3$ | 4 | 240 | 65,8 |
| 8 | a | 4 | 5,0 | 7,2 | 4,4 $(NH_4)_2CO_3$ | 2 | 220 | 65,1 |
| 9 | b | 4 | 5,0 | 7,2 | 2,2 $(NH_4)_2CO_3$/ 2,0 $Na_2CO_3$ | 4 | 240 | 71,6 |

**Beispiel 2**

20 g 1-Hydroxyethan-1,1-tetranatriumdiphosphonat werden mit der 6-fachen molaren Menge an Propionsäureanhydrid versetzt und nach 100 Minuten bei 130 °C unter reduziertem Druck von den flüchtigen Bestandteilen und dem überschüssigen Propionsäureanhydrid befreit.

Die Weiterverarbeitung nach Methode a (220 °C/1 Std.) ergab 53,7 % an Vinyldiphosphonsäue. Der Gehalt an Vinyldiphosphonsäure wird durch Kernresonanzmessung bestimmt.

**Beispiel 3**

Vergleichsbeispiel (entsprechend Beispiel 1 aus DE-PS 2 108 042)

2 g 1-Hydroxyethan-1,1-tetranatriumdiphosphonat (enthalten 9,6 Gewichts-% Kristallwasser) werden in einem Platintiegel 32 Minuten lang unter Stickstoffatmosphäre auf 380 °C erhitzt. Der Gewichtsverlust beträgt 11,4 % äquivalent einem Verlust von 0,32 Mol Wasser/Mol wasserfreiem Tetranatriumdiphosphonat. Das erhaltene Gemisch enthält nach der kernmagnetischen Resonanzanalyse 16 % Vinylverbindungen.

## Beispiel 4

Vergleichsbeispiel (entsprechend Beispiel 2 aus GB-PS 1 204 967)

5 g wasserfreies 1-Hydroxyethan-1,1-diphosphonsäure wird mit der in der Tabelle 2 angegebenen Menge Natriumhydroxid vermischt und in einer offenen Porzellanschale im Muffelofen für die ebenfalls in der Tabelle angegebenen Zeiten und Temperaturen erhitzt. Das erhaltene Produkt wird mit kernmagnetischer Resonanz (P 31 NMR), dünnschichtchromatographisch und IR-spektroskopisch untersucht. In keinem der in der Tabelle angegebenen Versuche wurde eine größere Menge Vinyldiphosphonsäure gebildet.

## Tabelle 2 :

| Mol NaOH | Temp. | Reaktions- zeit | Farbe d. Produkts | Ausbeute |
|---|---|---|---|---|
| 4,5 | 350 °C, | 4 h, | altweiß *) | 0 |
| 4,5 | 450 °C, | 4 h, | schwarz *) | 0 |
| 4,0 | 350 °C, | 4 h, | altweiß *) | 0 |
| 3,0 | 350 °C, | 4 h, | Zersetzung | 0 |

*) teilweise Zersetzung, nach P-$^{31}$NMR, DC und IR so gut wie keine C = C-Doppelbindung ausgebildet.

## Ansprüche

1.) Verfahren zur Bildung von Vinyldiphosphonsäure und ihren Salzen durch Eliminierung einer flüchtigen Säure aus 1-(O-Acyl)ethan-1,1-diphosphonsäure.

2.) Verfahren gemäß Anspruch 1, dadurch gekennzeichnet, daß Essigsäure aus 1-(O-Acetyl)ethan-1,1-diphosphonsäure eliminiert wird.

3.) Verfahren gemäß Anspruch 1 bis 2, dadurch gekennzeichnet, daß die 1-(O-Acyl)ethan-1,1-diphosphonsäure in Form ihres Salzes, eingesetzt wird.

4.) Verfahren gemäß Anspruch 1 bis 3, dadurch gekennzeichnet, daß die 1-(O-Acyl)ethan-1,1-diphosphonsäure vorzugsweise in Form des Natrium-oder Kalium-oder Ammoniumsalzes eingesetzt wird.

5.) Verfahren gemäß den Ansprüchen 1 und 2, dadurch gekennzeichnet, daß das Verhältnis von Phosphonsäuregruppe zu den entsprechenden Kationen zwischen 1 : 1 und 1 : 2,5 beträgt.

6.) Verfahren gemäß den Ansprüchen 1 bis 5, dadurch gekennzeichnet, daß die Ausbildung der Doppelbindung bei Temperaturen von 200 bis 300 °C verläuft.

7.) Verfahren gemäß den Ansprüchen 1 bis 5, dadurch gekennzeichnet, daß bis zur Entfernung des Lösungsmittels im Vakuum, vorzugsweise bei 50 bis 500 mbar, gearbeitet wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | GB-A-1 204 967   (MONSANTO CO.)<br>* Seite 3, Zeilen 16-33; Seiten 9,10, Beispiele 1-7 *<br><br>--- | 1-7 | C 07 F   9/38 |
| X | US-A-3 062 792   (R.L. MCCONNELL)<br>* Spalte 2, Zeilen 61-71 *<br><br>--- | 1-7 | |
| Y | EP-A-0 061 115   (HOECHST AG)<br>* Seite 1, Zeile 8 - Seite 2, Zeile 10; Seite 8, Beispiel 1 *<br><br>----- | 1-7 | |

RECHERCHIERTE
SACHGEBIETE (Int. Cl.4)

C 07 F   9/00

Der vorliegende Recherchenbericht wurde für alle Patentansprüche erstellt.

| Recherchenort | Abschlußdatum der Recherche | Prüfer |
|---|---|---|
| DEN HAAG | 02-10-1987 | BESLIER L.M. |